# DEMANDE DE BREVET EUROPEEN

(11) **EP 4 560 893 A1**
(43) Date de publication de la demande: **28.05.2025**
(21) Numéro de dépôt: 24211063.3
(22) Date de dépôt: 06.11.2024
(51) Int. Cl.: H02K 5/20, H02K 9/19, H02K 11/33

(54) **CIRCUIT DE REFROIDISSEMENT POUR MACHINE ÉLECTRIQUE**

(30) Priorité: 16.11.2023 FR 2312574
(71) Demandeur: VALEO EMBRAYAGES, 80009 Amiens (FR)
(72) Inventeur: SQUITIERO, Thomas, 38070 St Quentin Fallavier (FR); AUBOURG, Benoit, 38070 St Quentin Fallavier (FR); BAILLY, Stéphane, 38070 St Quentin Fallavier (FR); GUILLEMOT, Xavier, 38070 St Quentin Fallavier (FR); CIAPIN, Aurélien, 38070 St Quentin Fallavier (FR); BALASUNDARAM, Dinesh, 600130 Chennai, Tamil Nadu (IN)
(74) Mandataire: Valeo Powertrain Systems

(57) **Abrégé**

L'invention concerne une machine électrique (1) tournante comportant:
- un moteur (2 électrique, formé par un rotor (21) mobile en rotation autour d'un arbre (22) et un stator (23) fixe entourant le rotor, s'étendant selon un axe (X),
- un carter (11) entourant le moteur (2),
- un système de refroidissement (4) permettant le passage d'un liquide de refroidissement, et
- un ensemble électronique (3) monté sur le carter et comportant au moins un module de puissance (22) disposé sur un dissipateur thermique (40) du système de refroidissement (4), le système de refroidissement comportant un premier conduit (41) alimentant le dissipateur (40), le premier conduit (41) étant disposé au niveau du carter (24) du moteur (2).

## Description

La présente invention concerne le domaine des machines électriques, et plus particulièrement un circuit de refroidissement pour machine électrique tournante pour engin de mobilité et par exemple un véhicule automobile.

Les machines électriques tournantes concernées par la présente invention sont par exemple des alternateurs, des alterno-demarreurs, des machines réversibles ou des moteurs électriques.

Une machine électrique tournante comprend un moteur formé par un rotor mobile en rotation autour d'un axe et un stator fixe entourant le rotor. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation. La machine électrique tournante comporte également un ensemble électronique comprenant plusieurs modules de puissance permettant de redresser le courant fourni par le stator. Cet ensemble électronique est monte sur le carter de la machine et notamment sur un des flasques formant le carter.

Lors du fonctionnement de la machine électrique tournante, quel que soit son mode de fonctionnement, il est important qu'elle soit refroidie. Notamment l'ensemble électronique et le stator.

Ce type de machine est habituellement refroidie par un système de refroidissement comportant un fluide de refroidissement. Le système traverse l'ensemble électronique et circule autour du moteur. Un inconvénient de ces systèmes de refroidissement provient du fait qu'ils sont alimentés par une arrivée en fluide de refroidissement, arrivant directement du reste du véhicule, qui est encombrante. Il est ainsi difficile d'intégrer la machine électrique dans le véhicule.

La présente invention a donc pour objet de pallier un ou plusieurs des inconvénients des dispositifs de l'art antérieur en proposant un système de refroidissement pour machine électrique amélioré.

Pour cela la présente invention propose une machine électrique tournante comportant:
- un moteur électrique, formé par un rotor mobile en rotation autour d'un arbre et un stator fixe entourant le rotor, s'étendant selon un axe,
- un carter entourant le moteur,
- un système de refroidissement permettant le passage d'un liquide de refroidissement, et
- un ensemble électronique monté sur le carter et comportant au moins un module de puissance disposé sur un dissipateur thermique du système de refroidissement,
le système de refroidissement comportant un premier conduit alimentant le dissipateur, le premier conduit étant disposé au niveau du carter du moteur.

Il est important que le dispositif électronique de puissance soit refroidi, par le dissipateur, avant le moteur pour garantir de meilleures performances de fonctionnement de l'ensemble électronique qui nécessite un refroidissement plus important que le moteur.

La présente invention propose également une machine électrique tournante comportant:
- un moteur électrique, formé par un rotor mobile en rotation autour d'un arbre et un stator fixe entourant le rotor, s'étendant selon un axe,
- un carter entourant le moteur,
- un système de refroidissement permettant le passage d'un liquide de refroidissement, et
- un ensemble électronique monté sur le carter et comportant au moins un module de puissance disposé sur un dissipateur thermique du système de refroidissement,
le système de refroidissement comportant un premier conduit alimentant le dissipateur, le premier conduit étant disposé au niveau du carter du moteur et conduit supplémentaire disposé au niveau du carter du moteur parallèlement au premier conduit, plaqué contre le carter, et par exemple fixé, pressé et/ou collé au carter.

Un tel système de refroidissement réduit l'encombrement de la machine et facilite son intégration dans le véhicule ou l'engin de mobilité.

Selon un mode de réalisation de l'invention, le premier conduit est disposé perpendiculairement à l'axe de l'arbre et perpendiculairement au dissipateur.

Selon un mode de réalisation de l'invention, l'entrée du premier conduit est plaquée contre le carter, le premier conduit formant un zigzag en direction du dissipateur.

Selon un mode de réalisation de l'invention, le premier conduit forme un premier coude orientant le conduit vers la machine, puis un deuxième coude orientant le conduit vers le dissipateur.

Selon un mode de réalisation de l'invention, le premier conduit débouche dans le dissipateur.

Selon un mode de réalisation de l'invention, le premier conduit est fixé au carter, par exemple le premier conduit est pressé et/ou collé au carter.

Le conduit d'entrée est ainsi plaqué contre le carter, au plus proche de la machine, ce qui réduit l'encombrement de la machine et facilite son intégration dans le véhicule ou l'engin de mobilité.

Selon un mode de réalisation de l'invention, le système de refroidissement comporte un conduit supplémentaire jouant le rôle de conduit de sortie, et un circuit de refroidissement circulaire du moteur débouchant dans ce conduit supplémentaire.

En effet, il est important que le circuit de refroidissement soit disposé complètement autour du boîtier du moteur pour assurer un bon effet de refroidissement.

Selon un mode de réalisation de l'invention, le conduit supplémentaire est disposé au niveau du carter du moteur.

Selon un mode de réalisation de l'invention, le conduit supplémentaire est disposé parallèlement au premier conduit, plaqué contre le carter, et par exemple fixé, pressé et/ou collé au carter.

Un tel système de refroidissement réduit l'encombrement de la machine et facilite son intégration dans le véhicule ou l'engin de mobilité.

L'invention concerne également un véhicule automobile comportant une machine électrique tournante selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue en élévation en transparence d'une machine électrique avec un système de refroidissement selon l'invention,
- la [Fig. 2] est une vue en élévation d'une machine électrique avec un système de refroidissement selon l'invention,
- la [Fig. 3] est une vue en coupe transversale d'une machine électrique avec un système de refroidissement selon l'invention.

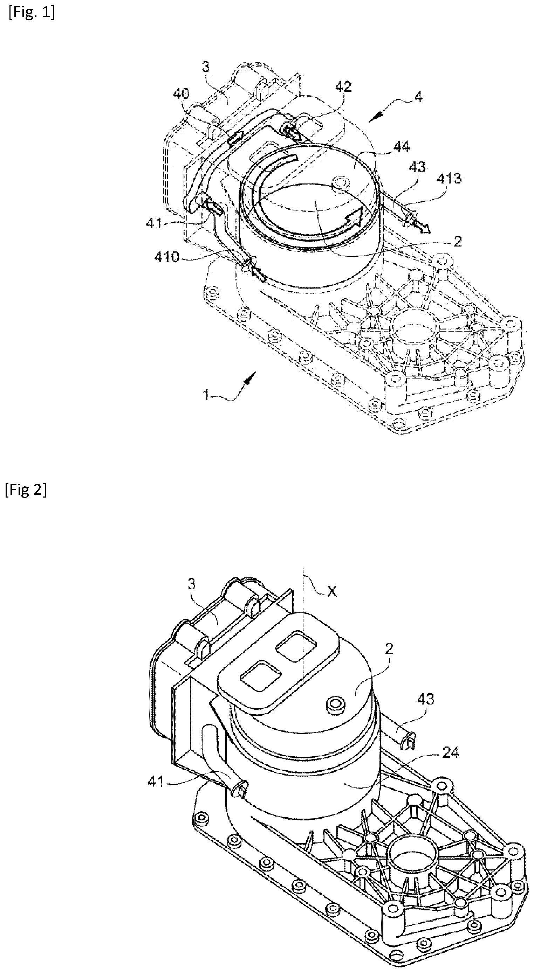

La présente invention [Fig. 1] concerne une machine électrique tournante 1 comportant un circuit de refroidissement avec liquide de refroidissement. La machine électrique 1 est une machine pour engin de mobilité avec au moins 2 roues, et par exemple avec 4 roues tel qu'un véhicule automobile.

L'invention s'applique par exemple au domaine des machines électriques tournantes telles que les alternateurs, les machines réversibles telles que les alterno-demarreurs ou les moteurs électriques.

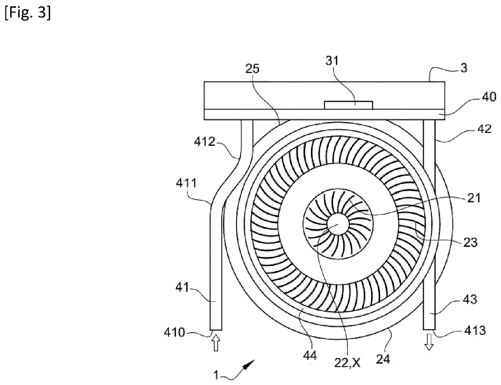

Selon un mode de réalisation de l'invention, visible [Fig. 1] à [Fig. 3], la machine électrique 1 tournante comprend un moteur 2, un ensemble électronique 3 et système de refroidissement 4.

Selon un mode de réalisation de l'invention, visible [Fig. 3], le moteur 2 comprend un rotor 21 mobile en rotation autour d'un arbre 22 et un stator 23 fixe entourant le rotor. Le mouvement de rotation du rotor 21 se fait autour d'un axe X.

En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation.

Selon un mode de réalisation de l'invention, le moteur est disposé dans un carter 24. Selon un mode de réalisation de l'invention, le carter 24 à une forme adaptée pour recevoir le moteur 2 et par exemple à une forme de cylindre d'axe longitudinale parallèle à l'axe 22 du moteur.

Selon un mode de réalisation de l'invention, le carter comporte une face 25 aplatie. C'est-à-dire qu'une section du cylindre est plate. Cette face 25 est considérée comme la face 25 arrière du carter 24. Le cylindre est fermé par deux plaques disposées aux extrémités. Le carter 24 permet de maintenir et de protéger le moteur 2 formé par le stator 23 et le rotor 22.

Selon un mode de réalisation de l'invention, le carter 24 comporte des moyens de fixation, non représentés, permettant le montage de la machine électrique tournante 1 dans ou sur un engin de mobilité.

Dans le cadre de l'invention, l'ensemble électronique est monté sur le carter 24 du moteur 2, plus précisément sur la face longitudinale 25 arrière formant une partie du cylindre du carter 24.

Selon un mode de réalisation de l'invention, l'ensemble électronique 3 comporte au moins un module électronique 31 de puissance. Le module électronique 31 de puissance est monté sur un dissipateur thermique 40 permettant son refroidissement. Le dissipateur fait partie du système de refroidissement de la machine 1. Selon un mode de réalisation de l'invention, le dissipateur est disposé parallèlement à l'axe X de l'arbre 22, sur la face longitudinale 25 arrière du carter 24 du moteur 2.

Selon un mode de réalisation de l'invention, le dissipateur 40 est formé par une chambre ou un canal qui est alimentée en fluide de refroidissement par un premier conduit 41, du système de refroidissement 4, qui joue le rôle de conduit d'entrée. Ce premier conduit 41 est lui-même alimenté par l'ensemble de refroidissement de l'engin ou du véhicule.

Dans le cadre de l'invention, ce premier conduit 41 est disposé au niveau du carter 24 du moteur 2. Plus précisément, le premier conduit 41 est disposé perpendiculairement à l'axe X de l'arbre 22 et perpendiculairement au dissipateur 40. Selon un mode de réalisation de l'invention, l'entrée 410 du premier conduit 41 est plaquée contre le carter 24, le premier conduit 41 formant ensuite un zigzag en direction du dissipateur 40. Plus précisément, le premier conduit 41 forme un premier coude 411 orientant le conduit vers la machine, puis un deuxième coude 412 orientant le conduit vers le dissipateur 40. Les deux coudes 441, 412 sont dans le même plan axial de l'axe 22 du moteur 2. Selon un mode de réalisation de l'invention, le premier conduit 31 débouche sous l'ensemble électronique 3, et plus précisément dans le dissipateur 40 au niveau de sa face orientée vers la machine 2.

Selon un mode de réalisation de l'invention, l'étanchéité entre le premier conduit 41 et le dissipateur 40 est réalisée avec un joint plat.

Selon un mode de réalisation de l'invention, le premier conduit 41 est fixé au carter 24. Selon un mode de réalisation de l'invention, le premier conduit 41 est pressé et collé au carter 24.

Le conduit d'entrée 41 est ainsi plaqué contre le carter 24, au plus proche de la machine 1, ce qui réduit l'encombrement de la machine et facilite son intégration dans le véhicule ou l'engin de mobilité.

Selon un mode de réalisation de l'invention, le système de refroidissement 4 comporte un deuxième conduit 42 débouchant du dissipateur 40 pour le relier au circuit de refroidissement 44 du moteur.

Selon un mode de réalisation de l'invention, l'étanchéité entre le dissipateur 40 et le deuxième conduit 42 est réalisée avec un joint plat.

Selon un mode de réalisation de l'invention, l'étanchéité entre le deuxième conduit 42 et le circuit de refroidissement 44 du moteur 2 est réalisée avec un joint plat.

Selon un mode de réalisation de l'invention, le circuit de refroidissement 44 du moteur, du système de refroidissement, est formée par une chambre 44 circulaire, c'est-à-dire disposé circulairement autour du moteur 2, entre le moteur 2 et le carter 24. En effet, il est important que le circuit 44 de refroidissement soit disposé complètement autour du boîtier du moteur 2 en rotation pour assurer un bon effet de refroidissement.

Selon un mode de réalisation de l'invention, la hauteur h de chambre 44, c'est-à-dire sa dimension parallèle à l'axe X de l'arbre 22 est identique à la hauteur du moteur 2, de façon à optimiser le refroidissement.

Selon un mode de réalisation de l'invention, l'épaisseur e de la chambre 44 du moteur 2 est inférieure à la hauteur h.

Dans le cadre de l'invention, le système de refroidissement comporte un conduit 43 supplémentaire jouant le rôle de conduit de sortie, la chambre 44 circulaire débouchant dans ce conduit 43 supplémentaire.

Selon un mode de réalisation de l'invention, l'étanchéité entre et le circuit de refroidissement 44 du moteur et le conduit 43 supplémentaire est réalisée avec un joint plat. Selon un mode de réalisation de l'invention, ce conduit 43 supplémentaire débouche ensuite dans l'ensemble de refroidissement de l'engin ou du véhicule.

Dans le cadre de l'invention, ce conduit 43 supplémentaire est disposé au niveau du carter 24 du moteur 2. Plus précisément, le conduit 43 supplémentaire est disposé perpendiculairement à l'axe X de l'arbre 22 et parallèlement au premier conduit 31.

Selon un mode de réalisation de l'invention, la sortie 413 du conduit 43 supplémentaire est plaquée contre le carter 24.

Selon un mode de réalisation de l'invention, le conduit 43 supplémentaire est fixé au carter 24.

Selon un mode de réalisation de l'invention, le conduit 43 supplémentaire est pressé et collé au carter 24.

Le conduit de sortie 43 est ainsi plaqué contre le carter, au plus proche de la machine, ce qui réduit l'encombrement de la machine et facilite son intégration dans le véhicule ou l'engin de mobilité.

L'entrée 410 et la sortie 413 du fluide de refroidissement dans le système de refroidissement 4 sont ainsi disposées au même niveau, les ouvertures du premier conduit et du conduit supplémentaire étant orientées dans la même direction.

Un tel système de refroidissement réduit l'encombrement de la machine et facilite son intégration dans le véhicule ou l'engin de mobilité.

Selon un mode de réalisation, l'espacement entre l'entrée et la sortie de la chambre de refroidissement 44 du moteur 2 est défini pour optimiser la circulation du liquide de refroidissement.

Selon un mode de réalisation de l'invention, le fluide de refroidissement est un liquide de refroidissement, et par exemple de l'eau ou tout autre liquide ayant les propriétés nécessaires pour refroidir la machine 1.

Ainsi lors du fonctionnement de la machine électrique 1, le fluide de refroidissement arrive depuis l'engin ou le véhicule par l'entrée 410 du premier conduit 41. Le fluide passe ensuite dans le dissipateur 40 pour refroidir l'ensemble électronique avant le moteur 2. En effet, il est important que le dispositif électronique de puissance soit refroidi avant le moteur 2 pour garantir de meilleures performances de fonctionnement de l'ensemble électronique qui nécessite un refroidissement plus important que le moteur 2.

Le fluide de refroidissement passe ensuite dans le deuxième conduit 42 puis débouche dans la chambre de refroidissement 44. Il est ensuite évacué par le conduit 43 supplémentaire, et sort par la sortie 413 de ce conduit 43.

Le refroidissement de l'ensemble électronique 3 et du moteur 2 permet de meilleurs performance de fonctionnement de la machine électrique 1.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Machine électrique (1) tournante comportant:
- un moteur (2) électrique, formé par un rotor (21) mobile en rotation autour d'un arbre (22) et un stator (23) fixe entourant le rotor, s'étendant selon un axe (X),
- un carter (11) entourant le moteur (2),
- un système de refroidissement (4) permettant le passage d'un liquide de refroidissement, et
- un ensemble électronique (3) monté sur le carter et comportant au moins un dissipateur thermique (40) du système de refroidissement (4),
caractérisée en ce le système de refroidissement comporte un premier conduit (41) alimentant le dissipateur (40), le premier conduit (41) étant disposé au niveau du carter (24) du moteur (2).

2. Machine électrique (1) selon la revendication 1, dans laquelle le premier conduit (41) est disposé perpendiculairement à l'axe (X) de l'arbre (22) et perpendiculairement au dissipateur (40).

3. Machine électrique (1) selon la revendication 1 ou 2, dans laquelle l'entrée (410) du premier conduit (41) est plaquée contre le carter (24).

4. Machine électrique (1) selon une des revendications 1 à 3, dans laquelle le premier conduit (41) forme un premier coude (411) orientant le conduit vers la machine, puis un deuxième coude (412) orientant le conduit vers le dissipateur (40).

5. Machine électrique (1) selon une des revendications 1 à 4, dans laquelle le premier conduit (31) débouche dans le dissipateur (40).

6. Machine électrique (1) selon une des revendications 1 à 5, dans laquelle le premier conduit (41) est fixé au carter (24), par exemple le premier conduit (41) est pressé et collé au carter (24).

7. Machine électrique (1) selon une des revendications 1 à 6, dans laquelle le système de refroidissement comporte un conduit (43) supplémentaire jouant le rôle de conduit de sortie, et un circuit (44) de refroidissement circulaire du moteur (2) débouchant dans ce conduit (43) supplémentaire.

8. Machine électrique (1) selon une des revendications 1 à 6, dans laquelle le conduit (43) supplémentaire est disposé au niveau du carter (24) du moteur (2).

9. Machine électrique (1) selon une des revendications 7 à 8, dans laquelle le conduit (43) supplémentaire est disposé parallèlement au premier conduit (31), plaqué contre le carter (24), et par exemple fixé, pressé et/ou collé au carter (24).

10. Véhicule automobile comportant une machine électrique tournante (1) selon une des revendications 1 à 9.
